Europäisches Patentamt

European Patent Office

Office européen des brevets

(11) Publication number: **0 255 119 A2**

# (12) EUROPEAN PATENT APPLICATION

(21) Application number: 87110970.8

(22) Date of filing: 29.07.87

(51) Int. Cl.⁴: **B60C 27/10**

(30) Priority: 30.07.86 JP 179560/86
03.10.86 JP 235899/86
24.06.87 JP 157219/87

(43) Date of publication of application:
**03.02.88 Bulletin 88/05**

(84) Designated Contracting States:
**CH DE FR LI**

(71) Applicant: **Bridgestone Corporation**
**10-1, Kyobashi 1-Chome Chuo-Ku**
**Tokyo 104(JP)**

(72) Inventor: **Tsuchiya, Kazuo**
**61-8, Shinbashi-cho**
**Yokohama-shi Kanagawa(JP)**
Inventor: **Aramaki, Kuninori**
**2034, Kamikurata-cho Totsuka-ku**
**Yokohama-shi Kanagawa(JP)**
Inventor: **Fukai, Toshio**
**161-27, Nase-cho Totsuka-ku**
**Yokohama-shi Kanagawa(JP)**
Inventor: **Sekine, Noboru**
**150-7, Kashio-cho Totsuka-ku**
**Yokohama-shi Kanagawa(JP)**

(74) Representative: **Dreiss, Hosenthien &**
**Fuhlendorf**
**Gerokstrasse 6**
**D-7000 Stuttgart 1(DE)**

(54) Retaining apparatus for skid preventing device.

(57) A retaining apparatus for attaching a skid preventing device to the outer periphery of a tire is
disclosed. The inventive retaining apparatus is pro-
vided with: flexible elongated members forming a
loop for holding the skid preventing device at a
plurality of breadthwise extensions thereof; a support
for supporting one of said flexible elongated mem-
bers located on either of the breadthwise sides of
said skid preventing device, the support allowing the
one of the flexible elongated members to move in
one of the longitudinal directions; and a resilient
member for urging the aforesaid one in such one
direction only. Accordingly, since the tension of the
elongated member is normally maintained at a predetermined level, it is possible to positively fit the
skid preventing device around the outer periphery of
a tire.

FIG. 1

## RETAINING APPARATUS FOR SKID PREVENTING DEVICE

## BACKGROUND OF THE INVENTION

### Field of the Invention

The present invention relates to a retaining apparatus used for attaching a skid preventing device to the outer periphery of a tire.

## DESCRIPTION OF THE RELATED ART

In general, metal chains have heretofore been used as a device for preventing skidding for use on vehicles, typically during a snowfall or the like. In addition to the metal chains, a skid preventing device made of rubber, urethane elastomer or the like is previously proposed in Japanese Utility Model Publication No. 8483/1979. Another type of skid preventing device is available in which rubber is disposed in the form of a net in order to reduce the level of vibration occurring during movement of a vehicle.

Each of these known types of skid preventing device is arranged such that it is fitted over a tire by engaging the breadthwise extensions thereof with retaining means such as a wire rope, a rubber cord or the like. If the retaining force of the retaining means is weakened, the loop diameter of the skid preventing device may be enlarged by centrifugal force during movement of a vehicle, and this might prevent the device from positively fitting around the tire. This problem frequently takes place particularly when the skid preventing device is attached to a tire without jacking up. This is because ropes connecting the breadthwise extensions of the skid preventing device are disposed eccentrically with respect to the axis of the wheel. If the ropes are attached in such an eccentric manner, the rope located on the exposed side of the tire opposite to an axle may be loosened by a length of the order of 40 to 50 mm. It becomes therefore necessary to stop the vehicle in order to re-tighten the loosened rope.

In the case of a skid preventing device of the type in which rubber rings are used instead of ropes, the breadthwise extensions of the skid preventing device are pulled in mutually opposite directions by the tensions of the rubber rings. However, since rubber rings are typically subjected to great local elongation, they are easily stretched by small force (side force produced in a vehicle, centrifugal force or the like). Accordingly, at the time of sudden tire skidding or during the high-speed movement of a vehicle, the rubber rings may be stretched, and this might prevent the skid preventing device from positively fitting around the tire.

It is therefore an object of the present invention to provide a retaining apparatus for a skid preventing device by means of which the skid prevent device can continuously be positively fitted over a tire without the need for retightening after a vehicle has started its movement.

## SUMMARY OF THE INVENTION

The aforesaid object is achieved by the present invention which provides a retaining apparatus for connecting breadthwise extensions of a skid preventing device with each other to fit the skid preventing device over a tire, characterized by: flexible elongated members each forming a loop for engagement with a plurality of breadthwise extensions of the skid preventing device located on the breadthwise sides thereof, the flexible elongated members respectively being movable in the longitudinal directions with respect to the breadthwise extensions; support means for supporting one of the flexible elongated members which is located on either of the breadthwise sides, the support means allowing the flexible elongated member to move in one of the aforesaid longitudinal directions; and a first urging means connected to the one of the flexible elongated members for urging the same in the aforesaid one direction only.

In accordance with the present invention, during movement of a vehicle, the flexible elongated member is pulled in one direction only under the urging force of the urging means, and the support means serves to prevent such member from moving back. Accordingly, since the tension of the elongated member is normally maintained at a predetermined level, it is possible to positively fit the skid preventing device around the outer periphery of a tire.

Further objects, features and advantages of the present invention will become apparent from the following description of preferred embodiments of the present invention with reference to the accompanying drawings.

## DESCRIPTION OF THE DRAWINGS

Fig. 1 is a diagrammatic, cross-sectional view of a first preferred embodiment of a retaining apparatus for a skid preventing device in accordance with the present invention;

Fig. 2 is a diagrammatic view of the first embodiment and shows in perspective the skid preventing device with the first embodiment attached to a tire;

Fig. 3 is a diagrammatic, cross-sectional view of a second preferred embodiment;

Fig. 4 is a diagrammatic, cross-sectional view of the essential portion of a third embodiment;

Fig. 5 is a diagrammatic, side sectional view of one modification of a hook used in the aforesaid embodiments;

Fig. 6 is a diagrammatic, cross-sectional view of a fourth embodiment;

Fig. 7 is a diagrammatic view of the fourth embodiment and shows in perspective the skid preventing device with the fourth embodiment attached to a tire;

Fig. 8 is a diagrammatic, front elevational view of a fifth preferred embodiment;

Fig. 9 is a detailed cross-sectional view of the essential portion of the fifth embodiment shown in Fig. 8;

Fig. 10 is a cross-sectional view taken along the line IX - IX of Fig. 9;

Fig. 11 is a diagrammatic, front elevational view of one modification of the fifth embodiment;

Fig. 12 is a detailed cross-sectional view of the essential portion of the modification shown in Fig. 11;

Fig. 13 is a diagrammatic, perspective view of a sixth preferred embodiment;

Fig. 14 is a cross-sectional view taken along the line XIV - XIV of Fig. 13;

Fig. 15 is a cross-sectional view taken along the line XV - XV of Fig. 14; and

Fig. 16 is a cross-sectional view taken along the line XVI - XVI.

Fig. 17 is a diagrammatic front view of a seventh preferred embodiment, and

Fig. 18 is a side view of the seventh embodiment.

## DESCRIPTION OF THE PREFERRED EMBODIMENTS

Preferred embodiments of the present invention will be described below with reference to the accompanying drawings.

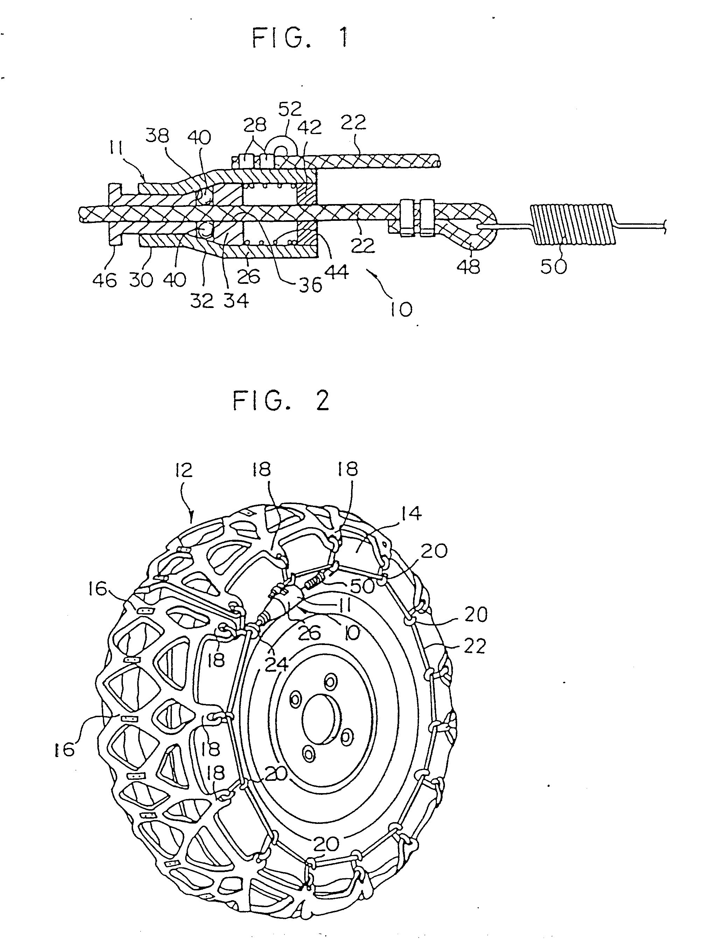

Fig. 1 shows the essential portion of a first preferred embodiment of a retaining apparatus of the present invention and Fig. 2 shows the first embodiment of the retaining apparatus by means of which a skid preventing device is fitted over a tire; in which the retaining apparatus, the skid preventing device and the tire are respectively indicated at 10, 12 and 14.

The skid preventing device 12 is formed of a thin-walled rubber material, and has mounting portions 18 which are equally spaced apart in the longitudinal direction of the device 12 and project in the breadthwise directions of bodies 16. Each of the bodies 16 has a substantial rhombic shape in plan view and is integral with the adjacent one, thereby constituting the skid preventing device 12. The mounting portions 18 each have a hook 20 at their projecting ends, and a wire 22 constituting a flexible elongated member is engaged with the hooks 20 at its intermediate portions.

The mounting portions 18 formed at the longitudinal ends of the skid preventing device 12 are engaged with each other by means of a bifurcated hook 24 such that the longitudinal ends are connected to each other. The hook 24 also functions to engage with an intermediate portion of the wire 22 as do the hooks 20.

Although Fig. 2 is a perspective view of the skid preventing device 12 attached to the tire 14 but shows only the state which can be viewed from one side of a vehicle body (not shown), the illustrated state of the device 12 as attached is of course substantially the same as the attached state of the device 12 on the non-visible side in Fig. 2, that is, on the back side of the tire 14 facing the center of the vehicle body. However, the retaining apparatus 10 is not provided on this back side, and only a wire in a looped form (not shown) is used for engagement with the breadthwise extensions (not shown) of the skid preventing device 12 which are located on the back side of the tire 14.

As shown in Fig. 1, the retaining apparatus 10 includes an engagement assembly 11 serving as a support means and having a body 26, the wire 22 being connected at its one end to the body 26. Specifically, the body 26 has a substantially cylindrical shape and the one end of the wire 22 is secured to the outer periphery of the same by means of a pair of brackets 28.

The body 26 has a small-diameter portion 30 at an end portion opposite to the location at which the wire 22 is secured, and has a tapered portion 32 between the ends.

The small-diameter portion 30 and the tapered portion 32 accommodate a substantially cylindrical slider 34. The slider 34 has an axial through-hole 36, and the other end portion of the wire 22 is passed through the through-hole 36.

The slider 34 has a plurality of through-holes 38 which extend radially from the axis (preferably, equally spaced apart about the axis and three in number). A lock ball 40 is accommodated in each of the through-holes 38.

A lid 42 is attached to one end of the body 26, and a compression spring 44 is interposed between the lid 42 and the slider 34, and the slider 34 is normally urged toward the small-diameter portion 30 under the urging force of the coiled spring 44. Thus, the inner side of the tapered portion 32 forces the lock balls 40 toward the axis, that is, the outer periphery of the wire 22 which is inserted in the axial through-hole 36, and this prevents the wire 22 from moving to the left as viewed in Fig. 1.

In this case, when the wire 22 is to move through the through-hole 36 to the left, the lock balls 40 are pressed against the inner side of the tapered portion 32 by the motion of the wire 22. Thus, since the plurality of lock balls 40 are further forced against the wire 33, they cooperate with one another in firmly clamping the wire 22, thereby preventing the wire 22 from moving to the left as viewed in Fig. 1.

An operating portion 46 of the slider 24 extends through the small-diameter portion 30. If the operating portion 46 is pushed into the small-diameter portion 30, clearances are formed between the lock balls 40 and the inner surface of the tapered portion 32 to release the wire 22 from its firmly clamped state thereby allowing the wire 22 to slide in the through-hole 36 to the left as viewed in Fig. 1.

The end portion of the wire 22 extending through the through-hole 36 is formed into a loop 48, and the loop 48 is engaged with one end of a tension spring 50 serving as an urging means. As shown in Fig. 2, at the time of assembly, the other end of the tension spring 50 is engaged with a suitable position of the wire 22 so that it may serve to produce a force acting to pull the wire 22 to the right as viewed in Fig. 1.

It is preferred that a bracket 52 is attached to the outer periphery of the body 26 for engaging the body 26 with the hook 20 or the like.

The operation of the first embodiment will be described below.

When the skid preventing device 12 is attached to the tire 14, the device 12 is fitted over the tire 14 and then a wire (not shown) is engaged with the breadthwise extensions (not shown) of the device 12 located on one of the breadthwise sides thereof, that is, on the back side of the tire 14 facing the center of a vehicle which is not illustrated in Fig. 2.

Subsequently, the wire 22 is engaged with the hooks 20 and 24 attached to the breadthwise extensions of the skid preventing device 12 located on the other side of the breadthwise sides thereof which is illustrated in Fig. 2.

In this state, if the other end of the tension spring 50 is engaged with a suitable portion such as the hook 20, the tension spring 50 applies a suitable level of tension to the wire 22. Thus, the skid preventing device 12 is tightly attached to the outer periphery of the tire 14.

When a vehicle starts to move forward, the skid preventing device 12 gets to fit around the tire 14 by the action of centrifugal force during the initial distance (about 100 meters) travelled by the vehicle, thereby correcting the eccentricity the device 12 with respect to the axis of the tire 14 and reshaping the wire 22 from an elliptical form to a substantially circular form. Thus, the wire 22 is loosened due to the presence of an extra length of about 30 to 50 mm of the same. However, the loosened wire 22 is pulled through the through-hole 36 by the tension of the tension spring 50. When the loosened portion is stretched, the lock balls 40 serve to prevent the wire 22 from moving back; accordingly, the wire 22 is prevented from coming off the hooks 20 and 24 and positively maintains the skid preventing device 12 in the state of being attached to the tire 14.

For removal, when the operating portion 46 is pushed into the body 26, the lock balls 40 are disengaged from the wire 22 to allow the wire 22 to be readily moved in the reverse direction. Thus, since the wire 22 is loosened as a whole, it is possible to remove it from the hooks 20 and 24.

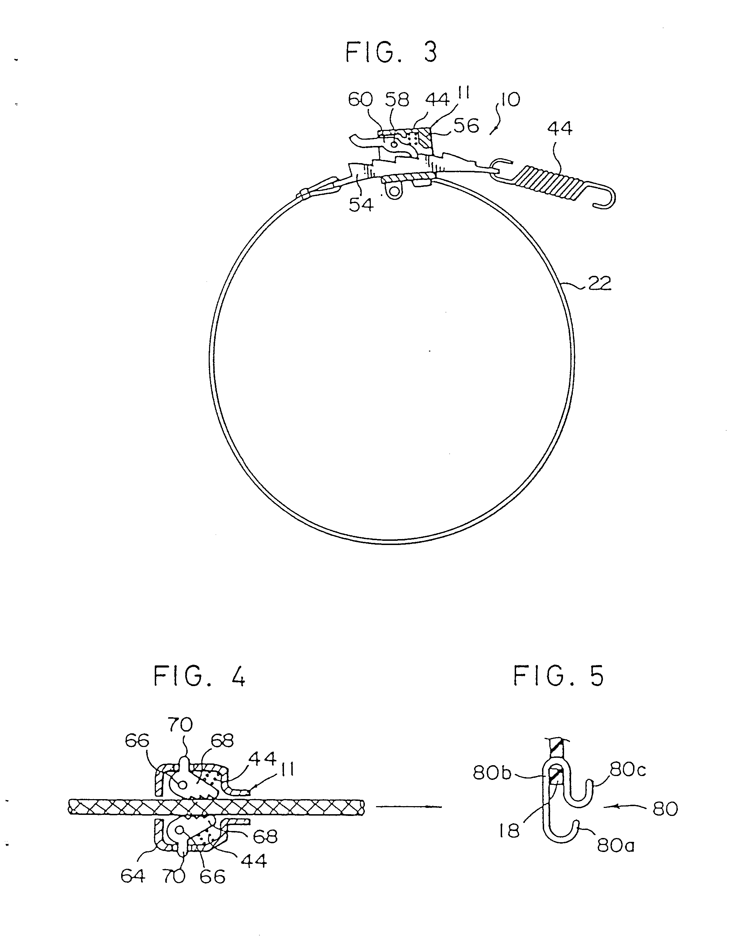

Fig. 3 shows a second preferred embodiment of a retaining apparatus of the present invention in which the retaining apparatus is likewise indicated at 10. In the second embodiment, the engagement assembly 11 is provided with a ratchet mechanism in which a ratchet metal member 54 attached to one end of the wire 22 extends through a body 56. The end of the ratchet metal member 54 extending through the body 56 is in turn attached to one end of the tension spring 50. A ratchet pawl 60 is journalled at its intermediate portion in the body 56 via a pin 58, and one end of the ratchet pawl 60 is pressed against a ratchet surface of the ratchet metal member 54 by means of the compression spring 44. Thus, the end of the wire 22 attached to the ratchet metal member 54 is capable of being moved through the body 56 toward the tension spring 50, but the engagement between the ratchet pawl 60 and the ratchet metal member 54 prevents the reverse movement of the wire 22.

Accordingly, the second embodiment succeeds in producing the same effect as does the first embodiment. For removal, when the other end of the ratchet pawl 60 projecting from the body 56 is depressed and rotated about the pin 58, the ratchet pawl 60 is disengaged from the ratchet metal member 54, thus loosening the wire 22.

Fig. 4 shows an engagement assembly incorporated in a retaining apparatus constituting a third preferred embodiment of the present invention in which the engagement assembly is likewise indicated at 11. In the third embodiment, a body 64 includes a plurality of cam cleats 68 which are equally spaced apart about the axis and pivotally supported by pins 66, respectively. The ratchet teeth of these cam cleats 68 are pressed against the wire 22 under the urging force of the compression springs 44. The surface portions of the wire 22 pressed by the ratchet teeth, as viewed in Fig. 4, are located on the right-hand side of a vertical plane in which the pins 66 are positioned. This enables further firm grip of the wire 22 in particular when the wire 22 tends to move back.

Arms 70 project from the respective backs of the cam cleats 68 to the exterior of the body 64. Thus, if the arms 70 are operated against the urging forces of the compression springs 44, the ratchet teeth formed on the cam cleats 68 are separated from the wire 22 to allow it to move back.

It is to be noted that, if an elastic elongated member such as a rubber ring together with the retaining apparatus 10 is engaged with the hooks 20 and 24 to assist in the tightening of the wire 22, the skid preventing device 12 is further effectively attached to the tire 14. In this case, instead of the hooks 20 and 24 having the configuration shown in Fig. 2, hooks 80 of the shape shown in Fig. 5 may be employed. The hook 80 has two hooking portions 80a and 80c as well as a fixing portion 80b to be pinched, and is fixed in a pinched manner to each of the mounting extensions 10 of the skid preventing device 12. The wire 22 may conveniently be engaged with either of the hooking portions 80a and 80c while the rubber portion may be engaged with the other of them. The arrangement is also applicable to preferred embodiments which will be described later.

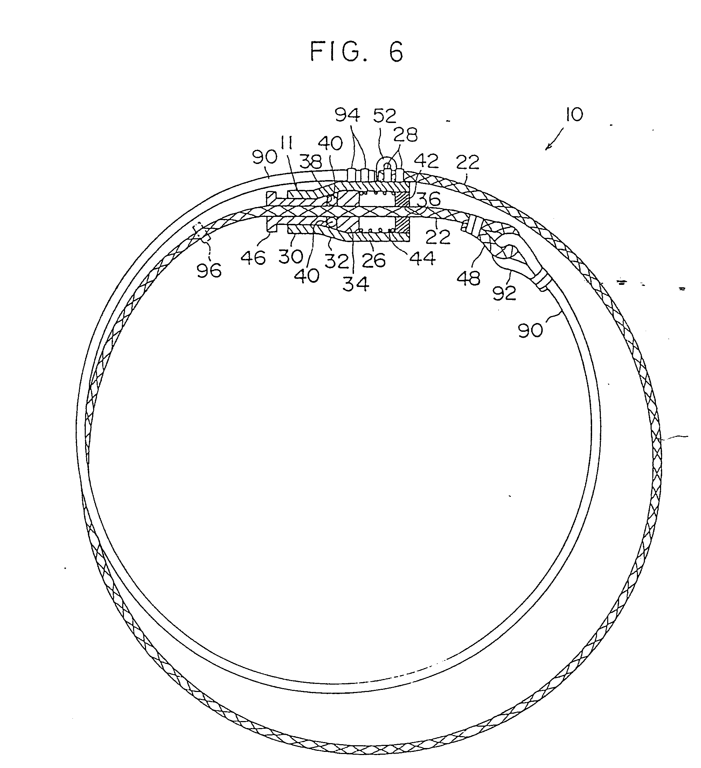

Fig. 6 shows a fourth preferred embodiment of the retaining apparatus of the present invention in which the retaining apparatus is likewise indicated at 10. In the fourth embodiment, the arrangements of the wire 22 and the engagement assembly 11 are the same as those used in the first embodiment, but an elongated rubber band 90 is employed as an urging means in place of the tension spring 50 used in the first embodiment. The rubber band 90 has a loop 92 at its one end, and the loop 92 is connected to the loop 48 of the wire 22. The other end of the rubber band 90 is secured to the engagement assembly 11 via the brackets 94. With this arrangement, the rubber band 90 as well as the wire 22 is looped as shown in Fig. 6.

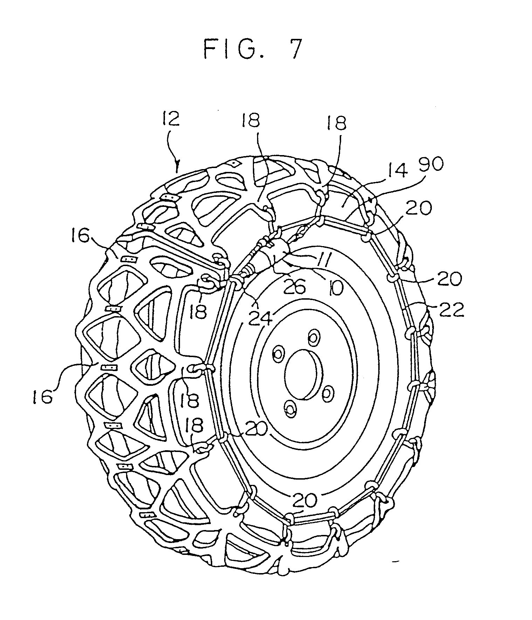

For attachment, the looped wire 22 is first engaged with the hooks 20 and 24 shown in Fig. 7, and the looped rubber band 90 is then engaged with the same. Thus, a suitable level of tension is applied to the wire 22 by the tensile force of the rubber band 90 so that the skid preventing device 12 is tightly attached to the outer periphery of the tire 14 as shown in Fig. 7.

As in the case of the above-described embodiments, the looseness of the wire 22 produced the initial movement of a vehicle is eliminated by the tension of the rubber band 90. However, unlike the above-described embodiments, since one end of the rubber band 90 is secured to the engagement assembly 11, it is unnecessary to provide an engagement position with which the one end is to be engaged. It is therefore possible to prevent the tension applied to the rubber band 90 from being varied due to any displacement of the engagement position which might be caused by variations in the force applied by an operator when he attaches the skid preventing device 12 to the tire 14. This ensures positive application of a predetermined level of tension.

In the fourth embodiment, when the rubber band 90 is to be engaged with the hooks 20 and 24, the rubber band 90 may be pulled in the direction transverse to its length instead of linearly in the lengthwise direction. It is therefore easy to bring the rubber band 90 into and out of engagement with the hooks 20 and 24. As compared with a conventional type of arrangement using three ring-shaped rubber bands, the force required for the engagement and disengagement is reduced.

The rubber band 90 can produce tightening force at the same level as that produced by the three ring-shaped rubber bands and, in addition, the wire 22 is restrained in a looped manner. Thanks to combination of these arrangements, it is possible to extremely effectively prevent the skid preventing device 12 from shifting with respect to the tire 14, coming off the tire 14 or being caught in the interior of the vehicle body.

It is to be noted that, although the engagement assembly 11 is engaged with the hooks 20 or the like, it may be disposed between the two adjacent hooks 20.

One end of the rubber band 90 may be detachably engaged with the engagement assembly 11 so that, when the tension needs to be adjusted, the rubber band 90 can be engaged with the hooks 20. After a single loop of the rubber band 90 has been formed, the thus-looped rubber band 90 may be engaged with the engagement assembly 11. In addition, it may be preferable that the end of the rubber band 90 is previously engaged with a suitable one or ones of the hooks 20. In this arrangement, it is unnecessary to completely loop the rubber band 90; for example, one or more turn of the band 90 may be formed.

When the skid preventing apparatus 12 is to be attached to the tire 14, if an excessive length of the wire 22 is drawn out of the engagement assembly 11 toward the rubber band 90, the tension acting upon the rubber band 90 becomes nullified. In order to prevent this phenomenon, it is preferable to provide limiting means for limiting the maximum length of the wire 22 which can be drawn from the engagement assembly 11. As an example, a stopper fitting 96 may be pinched onto a predetermined position of the wire 22, as shown by a phantom line in Fig. 6.

Of course, the engagement assemblies used in the second and third embodiments can also be applied to the aforesaid fourth embodiment in place of the one used in the first embodiment, and in addition, various other modifications having different arrangements are feasible.

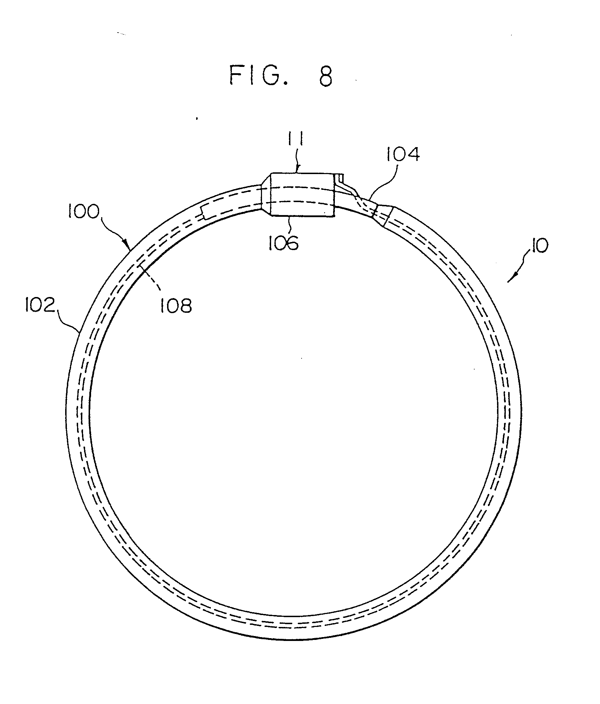

Figs. 8 to 10 shows a fifth preferred embodiment of a retaining apparatus of the present invention in which the retaining apparatus is likewise indicated at 10. The retaining apparatus 10 constituting the fifth embodiment includes a tension member 100 serving as an elongated member which is made of plastic or steel material. The tension member 100 includes a cylindrical body member 102 having a cutout extending along the axis and an end member 104 having a partially cutaway, columnar shape in cross-section and fixed to one end of the body member 102. The engagement assembly 11 is fixed to the other end of the body member 102.

The tension member 100 has an annular shape in cross section, and the end member 104 extends through a housing 106 of the engagement assembly 11 into the body member 102. The end of the end member 104 extending into the same is engaged with one end of a rubber band 108 which serves as an urging means. The rubber band 108 extend through the body member 102 and a through-hole 110 formed in the end member 104, and in turn is engaged with the housing 106.

With this arrangement, the tension member 100 is urged by the rubber band 108 such that the diameter of the loop of the tension member 100 is reduced to a size below a diameter assumed by the same which is free from the action of external force. The diameter of the tension member 100 in this state is established such as to become smaller than the diameter of a circle constituted by the hooking end portions of the hooks 20 and 24 which are arranged in an annular form in the aforesaid first embodiment shown in Fig. 2.

The end member 104 has a series of pawl portions 112 which are formed in a saw-toothed manner on the inner circumferential surface of the end member 104. The engagement assembly 11 includes a lock lever 116 constituted by a spring member having one end fixed to the housing 106 and the other end serving as an operating portion 114. A pawl portion 118 is formed at an intermediate portion of the lock lever 116.

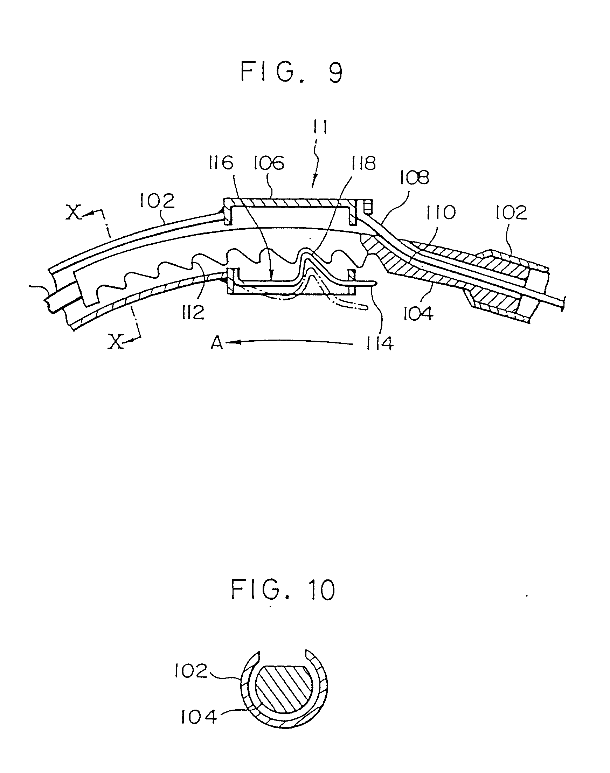

While no operating force is applied to the operating portion 114, the lock lever 116 is fitted between the adjacent pawl portions 112, as shown by a solid line in Fig. 9. Each of the pawl portions 112 is formed such that two lines intersect at one vertex thereof, with one of the lines extending at an acute angle of inclination, while the other extends at an obtuse angle of inclination. Accordingly, when the end member 104 receives a load which acts in the direction of an arrow A with respect to the body member 102, the pawl portions 112 press the pawl portion 118 to cause resilient deformation of the lock lever 116. Thus, the end member 104 is allowed to travel in the direction indicated by the arrow A. Accordingly, the engagement assembly 11 never prevents the tension member 100 from reducing its diameter under the urging force of the rubber band 108.

On the other hand, when the end member 104 receives a relative load which acts in the direction opposite to the arrow A, the pawl portion 118 serves to prevent the relative movement of the pawl portions 112, and thus the end member 104 is prevented from travelling in any direction. In a state wherein the lock lever 116 is resiliently deformed as shown in chain line in Fig. 9 by the operating force applied to the operating portion 114, the end member 104 is disengaged from the engagement assembly 11.

In the fourth embodiment having the aforesaid arrangement, the operating portion 114 is depressed to cause the lock lever 116 to assume the state shown by the chain line in Fig. 9. In this state, the loop diameter of the tension member 100 is enlarged against the urging force of the rubber band 108 until the tension member 100 is located around the hooks attached to the skid preventing device (indicated at 20 and 24 in Fig. 2 showing the second embodiment). Subsequently, when the operating portion 114 is released from the depression, any one of the pawl portions 112 is engaged with the pawl portion 118. However, irrespective of this engagement, the loop diameter of the tension member 100 is reduced under the urging force of the rubber band 108 until the tension member 100 is brought into pressure contact with the hooks.

In this state, when the vehicle starts its forward movement, the skid preventing device gets to fit around the tire, and the loop diameter of the tension member 100 is further reduced under the urging force of the rubber band 108. This reduction in loop diameter continues until the skid preventing device is completely fitted over the tire. The tension member 100 having the thus-reduced diameter is not again enlarged in diameter before the operating member 114 of the lock lever 116 is depressed.

As in the case of the fourth embodiment, in the retaining apparatus 10 constituting the fifth embodiment, it is possible to establish a wide variable range with respect to the aforesaid reduction in the loop diameter and the end member 104 is capable of being moved in the body member 102 without producing large frictional force between the member 102 and associated portions. This ensures smooth reduction in the loop diameter of the tension member 100.

In the fifth embodiment, since the tension member 100 has a single ring-shaped form, a simple appearance is achieved to improve aesthetic effects, and in addition no awkward operation is needed for assembly.

Since the tension member 100 used in the fifth embodiment is made of plastic or steel material, the tension member 100 itself has resiliency and constitutes an urging means. However, the member 100 need not necessarily has resiliency, and may be made of any kind of material having flexibility.

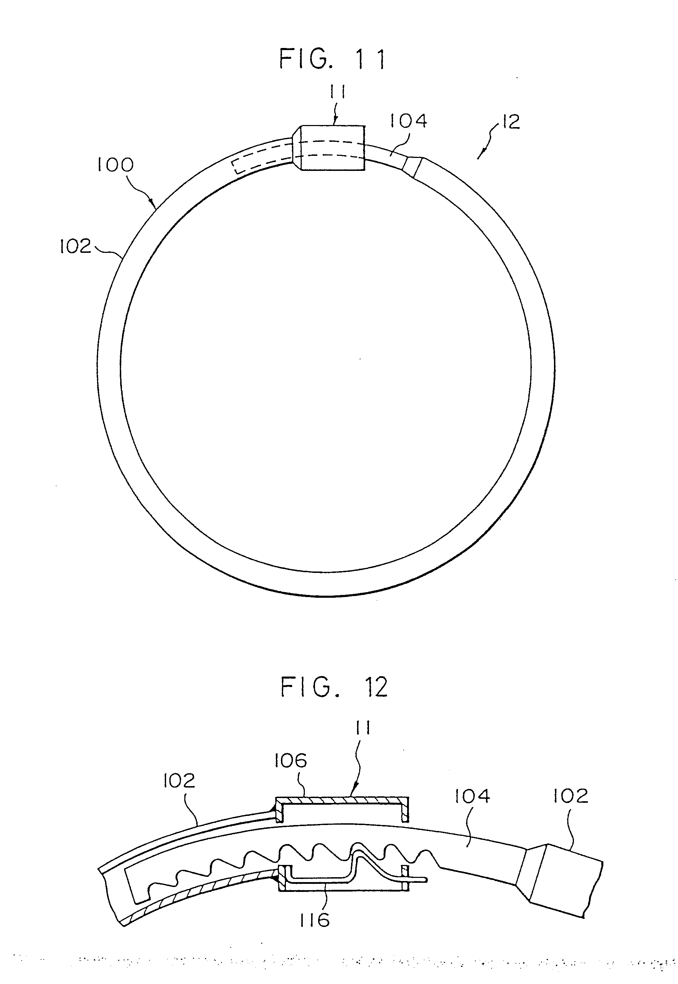

Figs. 11 and 12 show one modification of the aforesaid fifth embodiment. In this modification, the rubber band 108 used in the aforesaid fifth embodiment is eliminated and only the tension member 100 functions as an urging means.

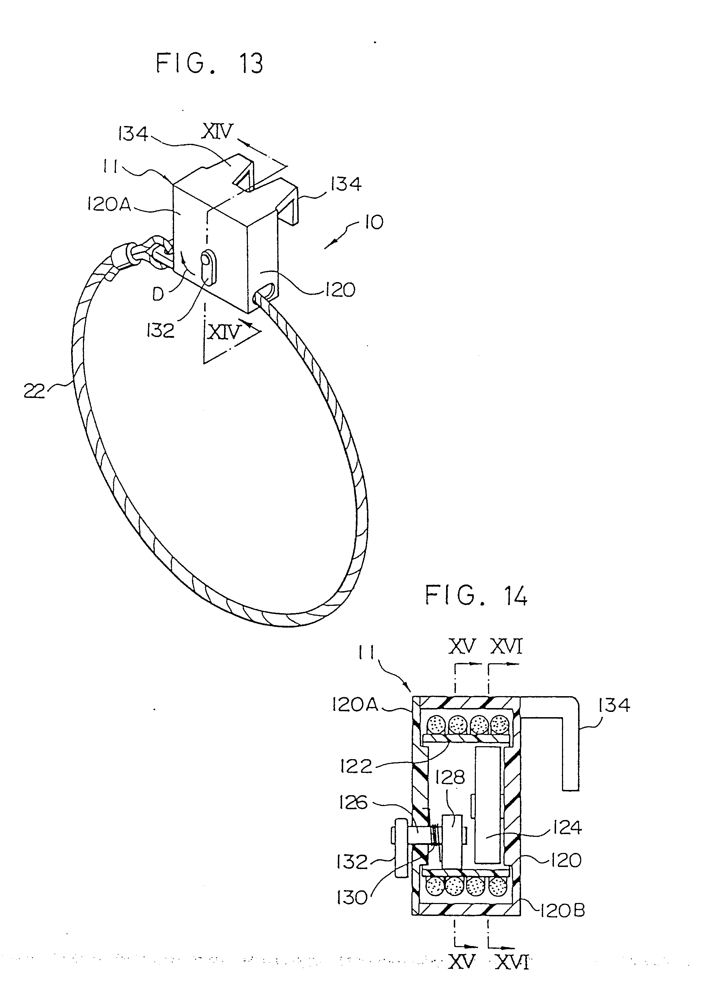

Figs. 13 to 16 show a sixth embodiment of a retaining assembly of the present invention in which the retaining assembly is likewise indicated at 10. The retaining assembly 10 constituting the sixth embodiment has the engagement assembly 11 in which it is possible to take up the wire 22 constituted by a flexible elongated member.

The engagement assembly 11 has a housing 120 and one end of the wire 22 is engaged with the housing 120. The other end of the wire 22 is engaged with the outer periphery of a cylindrical reel 122 which is rotatably accommodated in the housing 120.

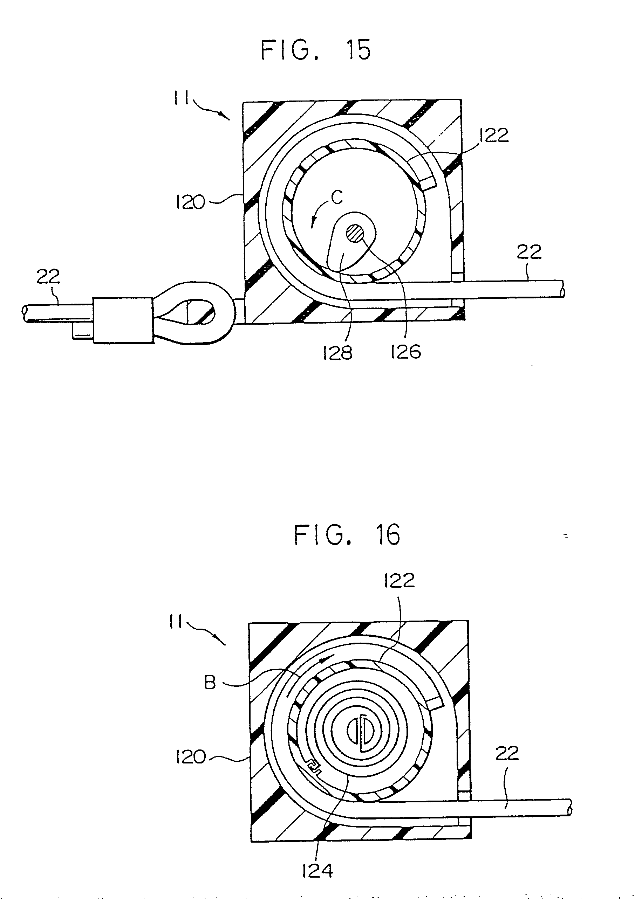

The reel 122 includes a spiral spring 124 having one end engaged with the housing 120 and the other end engaged with the inner circumferential portion of the reel 122. Thus, the reel 122 is urged by the spiral spring 124 in the direction indicated by an arrow B in Fig. 16, thereby taking up the wire 22.

The reel 122 also includes a lock cam 128 fixed to one end of a shaft 126 extending into the housing 120. A torsion spring 130 is fitted onto the shaft 126, and has one hooking portion engaged with the housing 120 and the other hooking portion engaged with the lock cam 128. Thus, the lock cam 128 is urged by the torsion spring 130 in the direction indicated by an arrow C in Fig. 15 so that the extending portion of the lock cam 128 is brought into pressure contact with the inner circumferential portion of the reel 122.

The urging force of the torsion spring 130 is controlled under the urging force of the spiral spring 124 to a level which does not prevent the reel 122 from taking up the wire 22. Also, when the wire 22 receives a load which acts to draw the wire 22 out of the reel 122, the lock cam 128 is firmly pressed against the reel 12 to prevent the rotation of the reel 122.

A lock release lever 132 is disposed in the vicinity of a front surface wall 120A of the housing 120 and is secured to the other end of the aforesaid shaft 126. When the lock release lever 132 is rotated against the urging force of the torsion spring 130 in the direction indicated by an arrow D (in the direction opposite to the arrow C) as viewed in Fig. 13, the lock cam 128 can be separated from the inner circumferential surface of the reel 122.

The engagement assembly 11 has a pair of mounting portions 134 having an L-shaped cross section and projecting from a rear surface wall 120B of the housing 120 opposite to the front surface wall 120A, and the skid preventing device may be engaged with the mounting portions 134.

The operation of the sixth embodiment having the aforesaid arrangement will be described below. When the engagement assembly 11 is engaged with a skid preventing device (not shown), the lock release lever 132 is rotated in the direction of the arrow D. In this state, a sufficient length of the wire 22 is drawn out of the reel 122, and the wire 22 is engaged with all the hooks attached to the skid preventing device. When the operation of the lock release lever 132 is stopped, the lock cam 128 is brought into pressure contact with the inner circumferential surface of the reel 122. However, irrespective of this pressure contact, the reel 122 takes up the wire 22 under the urging force of the spiral spring 124, thereby bringing the wire 22 into pressure contact with the hooks.

When the vehicle starts its forward movement and the skid prevent device gets to fit around the tire, the reel 122 takes up an extra length of the wire 22 which is drawn out under the urging force of the spiral spring 124.

Once the wire 22 has been taken up around the reel 122, the lock cam 128 prevents the reel 122 from rotating in the direction in which the wire 122 is drawn out. Accordingly, the wire 22 thus taken up cannot be drawn out before the lock release lever 132 is again operated.

In one modified form of the sixth embodiment, an internal ratchet wheel may be formed on the inner circumferential surface of the reel 122, and a pawl member engagable with the internal ratchet wheel may be disposed in place of the lock cam 128.

It is to be noted that, in the aforesaid first, fourth and sixth embodiments, the wire 22 may be coated with a resin or rubber for sliding movement with respect to the hooks 20 and 24 shown in Figs. 2 and 7, or the wire 22 may be covered with a protective cover, the cover being engaged with the hooks 20 and 24 such that the wire 22 may be moved in the protective cover. In addition, pulleys may be attached to the hooks 20 and 24 for assisting in the sliding movement of the wire 22.

Instead of the wire 22, an inelastic elongated product such as a fabric rope may be employed as a flexible elongated member. It is of course possible to employ any urging means other than the tension spring 50 and the rubber bands 90, 108.

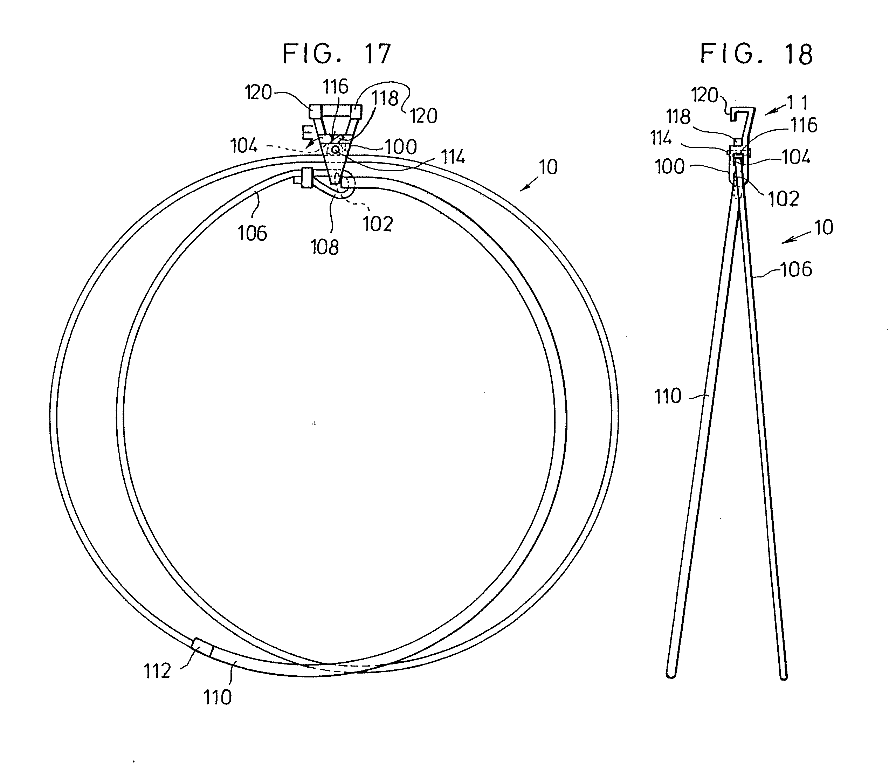

Figs. 17 and 18 show a seventh preferred embodiment of a retaining apparatus of the present invention in which the retaining apparatus is likewise indicated generally at 10. In the seventh preferred embodiment, the retaining apparatus 10 is arranged such that the retaining apparatus 10 constituting the fourth embodiment (Fig. 6) includes an engagement assembly 211 similar to the engagement assembly 11 used in the third embodiment (Fig. 4).

The engagement assembly 211 has a body 100 made of a aluminium casting, and a first through-hole 102 and a second through-hole 104 are formed through one end portion of the body 100 in parallel with each other. One end of a rope 106 covered with a resin is inserted in the first through-hole 102, and the thus-inserted portion of the rope 106 forms a loop 108. An intermediate portion of the rope 106 is inserted in the second through-hole 104, and the other end of the rope 106 is engaged with one end of a rubber band 110 via a pinched fitting 112. The other end of the rubber band 110 is engaged with the loop 108.

The second through-hole 104 has a rectangular cross sectional form, and this allows the rope 106 to be moved in the longitudinal direction as well as in the direction transverse to the length. The second through-hole 104 includes a cam cleat 116 pivotally supported via a pin 114 on the body 100. The cam cleat 116 is urged by a spring (not shown) in the direction of an arrow E to clamp the rope 106 between the member 116 and the inner wall of the second through-hole 104. If the cam cleat 116 is rotated in the direction opposite to the arrow E by operating an arm 118 formed on the same, it is possible to release the rope 106 from its clamped state.

A pair of hooking portion 120 are formed on the opposite end portion of the body 100 in place of the hook 24 used in the aforesaid fourth embodiment, and functions to connect the longitudinal ends of the skid preventing device 12.

In the seventh embodiment, after the hooks 120 has been engaged with the skid preventing device 12, the retaining apparatus 10 is engaged with the skid preventing device 12 as in the case of the aforesaid fourth embodiment. The engagement assembly 211 functions in the same manner as that of the third embodiment.

## Claims

1. A retaining apparatus for connecting a plurality of breadthwise extensions of a skid preventing device to fit said skid preventing device over a tire, characterized by:

flexible elongated members each forming a loop for engagement with said plurality of breadthwise extensions of said skid preventing device which are formed on breadthwise sides thereof, said flexible elongated members respectively being movable in the longitudinal directions with respect to said breadthwise extensions;

support means for supporting one of said flexible elongated members which is located on either of said breadthwise sides, said support means allowing said flexible elongated member to move in one of said longitudinal directions; and

a first urging means connected to said one of said flexible elongated members for urging said one in said one direction only.

2. A retaining apparatus according to Claim 1, characterized in that said support means includes a body having a cylindrical form and extending through said one of said flexible elongated members and lock means accommodated in said body for preventing said one from moving in the opposite direction.

3. A retaining apparatus according to Claim 2, characterized in that said body has an inner periphery formed with a small-diameter tapered portion extending in the other of said longitudinal directions of said flexible elongated member, said locking means including a plurality of lock balls interposed between said tapered portion and said flexible elongated member and a second urging means for urging said lock balls in said other of said longitudinal directions.

4. A retaining apparatus according to Claim 3, characterized in that a slider is interposed between said body and said flexible elongated member, said lock balls being accommodated in said slider and said lock balls being urged through said second urging means by said slider.

5. A retaining apparatus according to Claim 2, wherein said first urging means is a spring attached to one end of said one of said flexible elongated members.

6. A retaining apparatus according to Claim 2, wherein said urging means is an elongated resilient member having one end attached to one end of said one of said flexible elongated member.

7. A retaining apparatus according to Claim 6, characterized in that said elongated resilient member is disposed in a looped manner and has the other end attached to the outer circumferential portion of said body.

8. A retaining apparatus according to Claim 2, characterized in that said flexible elongated member has the other end attached to said outer circumferetial portion of said body.

9. A retaining apparatus according to Claim 2, characterized in that said locking means includes a plurality of cam cleats journalled in said body and disposed about said flexible elongated member and a second urging means urging said cam cleats in the longitudinal direction of said elongated member.

10. A retaining apparatus according to Claim 9, characterized in that each of said cam cleats has an arm capable of being separated from said flexible elongated member to allow said flexible elongated member to move in the opposite direction.

11. A retaining apparatus according to Claim 1, characterized in that said support means includes:
a body having a cylindrical form;
a ratchet metal member having one end connected to one end of said one of said flexible elongated members and the other end connected to said first urging means; and
a ratchet pawl supported by said body for engagement with a ratchet teeth formed on said ratchet metal member thereby preventing said one of said flexible elongated member from moving in said opposite direction.

12. A retaining apparatus according to Claim 12, characterized in that said flexible elongated member has an axially extending cutout and in that said support means includes:
an end member supported by one end of said one of said flexible elongated member and having saw-toothed teeth;
a body connected to the other end of said one of said flexible elongated members and extending into said end member; and
a lock lever supported by said body for engagement with said saw-toothed teeth thereby preventing said one of said flexible elongated members from moving in said opposite direction.

13. A retaining apparatus according to Claim 12, characterized in that said first urging means comprises a resilient body having one end connected to said end member, an intermediate portion forming a loop along said axially extending cutout.

14. A retaining apparatus according to Claim 1, characterized in that said first urging means comprises:
a housing connected to the other end of said flexible elongated member;
a reel rotatably supported in said housing and holding one end of said one of said flexible elongated members; and
preventing means for preventing said reel from rotating in the direction in which said flexible elongated member is drawn out of said reel, and
in that said first urging means is a spring acting to urge said reel in the direction in which said flexible elongated member is taken up.

FIG. 1

FIG. 2

FIG. 3

FIG. 4

FIG. 5

# FIG. 6

FIG. 7

FIG. 8

# FIG. 9

# FIG. 10

## FIG. 11

## FIG. 12

FIG. 13

FIG. 14

FIG. 15

FIG. 16

# FIG. 17

# FIG. 18

0 255 119